# EUROPÄISCHE PATENTSCHRIFT

(11) **EP 1 514 029 B1**
(45) Veröffentlichungstag und Bekanntmachung des Hinweises auf die Patenterteilung: **03.12.2008**
(21) Anmeldenummer: 03732393.8
(22) Anmeldetag: 16.05.2003
(51) Int. Cl.: F16B 11/00, F16B 5/02, E04H 12/08, E04B 1/38

(54) **FLANSCHVERBINDUNG**
FLANGE CONNECTION
RACCORD A BRIDES

(30) Priorität: 25.05.2002 DE 10223429
(43) Veröffentlichungstag der Anmeldung: 16.03.2005
(73) Patentinhaber: Wobben, Aloys, 26607 Aurich (DE)
(72) Erfinder: Wobben, Aloys, 26607 Aurich (DE)
(74) Vertreter: Eisenführ, Günther
(86) Internationale Anmeldenummer: PCT/EP2003/005146
(87) Internationale Veröffentlichungsnummer: WO 2003/100268

(56) Entgegenhaltungen:
- DE-A- 10 033 845
- DE-A- 19 639 576
- DE-A- 19 703 856
- US-A- 117 546
- US-A- 418 007
- US-A- 652 396
- US-A- 1 836 198
- US-A- 1 906 826
- US-A- 2 401 799
- US-A- 2 646 997
- US-A- 3 077 638
- US-A- 3 843 764
- US-A- 3 937 478
- US-A- 4 003 590
- US-A- 4 616 860
- US-A1- 2005 005 562
- D. LEHMANN: "Berechnung von L-Flanschen mit unterschiedlichen Kontaktflächen/ Ringflanschnormen nach DIN 4133" STAHLBAU, Bd. 69, Nr. 9, 2000, Seiten 682-687, XP002252238 Ernst & Sohn

## Beschreibung

Die vorliegende Erfindung betrifft ein Verfahren zum Verbinden von zwei Flanschen, insbesondere solchen Flanschen, die an Segmenten (Schüssen) eines Turmes einer Windenergieanlage angebracht sind und diese Segmente miteinander verbinden, wobei die Flansche kraftschlüssig miteinander verbunden werden.

Solche Flanschverbindungen sind im Stand der Technik seit langem bekannt und werden universell eingesetzt. Dabei finden als Verbindungsmittel zwischen den Flansche häufig Schrauben Verwendung, die einen Kraftschluss zwischen den Verbindungspartnern bewirken.

Die Qualität einer solchen Flanschverbindung ist dabei neben einer sorgfältigen Materialauswahl und einer einwandfreien Ausführung der Montage auch von der Oberfläche der Stoßflächen abhängig. Diese müssen besonders aufwändig und präzise bearbeitet werden, um eine ausreichend große und ebene Auflagefläche zu erzielen.

Dabei ist besonders der Aufwand zur Bearbeitung der Oberfläche hoch und steigt mit zunehmender Größe der zu bearbeitenden Komponenten überproportional an.

Bei der Errichtung von Gebäuden wird Mörtel zwischen den Stoßflächen der einzelnen Steine eingebracht. Dieser Mörtel dient der Verbindung der Steine untereinander, gleicht aber auch Unebenheiten der Oberfläche aus. Allerdings muss er entweder auf der Baustelle hergestellt oder zur Baustelle transportiert werden. Dort wird er dann manuell verarbeitet. Dabei erfordert die Verarbeitung ein gewisses Maß an Übung, um eine geeignete Menge des Mörtels aufzutragen.

Aus der DE 100 33 845 ist es bekannt, statt des Mörtels ein Polymer zu verwenden. Dieses Polymer wird in pastöser Phase aufgetragen und kann dann, ggf. nach dem Zusatz eines Härters, aushärten. Auch das Auftragen des Polymers erfolgt manuell und damit arbeitsintensiv. Außerdem muss auch das Polymer durch die Zugabe von Härter in einer geeigneten Menge vorbereitet werden. Auch hier erfordert die Vorbereitung einige Erfahrung.

Aus der DE 197 03 856 A1 ist bekannt, als Füllmaterial beispielsweise eine Gussmasse zu verwenden, die von einer thermoplastischen Hülle umschlossen ist. Die thermoplastische Hülle wird erhitzt, so dass das Füllmaterial mit der thermoplastischen Hülle möglicherweise vorhandene Unebenheiten der Stoßflächen ausgleichen kann.

Aufgabe der Erfindung ist es daher, eine Flanschverbindung und ein Verfahren zum Herstellen einer Flanschverbindung anzugeben, die bei wenigstens gleichbleibender Qualität der Verbindung mit geringerem Aufwand herstellbar ist.

Diese Aufgabe wird durch ein Verfahren mit den Merkmalen nach Anspruch 1 gelöst. Vorteilhafte Weiterbildungen sind in den Unteransprüchen beschrieben.

Bei der Erfindung ist vor Aufeinandersetzen der Flansche eine Verbindungsschicht auf einem der Verbindungsflansche ausgebildet. Diese Verbindungsschicht weist nach der Verbindung der Flansche zeitweise in einem zweiten Zeitraum eine deutlich niedrigere Viskosität auf als beim ersten Zeitraum vor der Verbindung der Flansche und in einem dritten Zeitraum nach Verbindung der Flansche.

Dabei liegt der Erfindung die Erkenntnis zugrunde, dass eine erhebliche Zeitersparnis erlangt werden kann, wenn auf der Baustelle selbst nicht mehr die Schicht auf einem der Flanschverbindungspartner aufgetragen werden muss, sondern diese Schicht bereits vorher dort aufgebracht wird. Weiterhin kann diese Schicht z.B. aus thermoplastischem Material (Kunststoff) bestehen. Dadurch kann eine gleichmäßige Qualität der Schicht bereits bei deren Herstellung unter kontrollierten Bedingungen sichergestellt werden und die Gefahr, z. B. von Einschlüssen von Fremdmaterial in die Schicht bei einer Verarbeitung im Freien, kann sicher ausgeschlossen werden. Außerdem kann diese Schicht entweder vor dem Transport der einzelnen Sektionen eines Turmes auf die Stoßfläche gelegt werden oder auf der Baustelle aus einer Transportverpackung entnommen und zeitsparend auf die Stoßfläche gelegt werden.

Um die Festigkeit der Flanschverbindung nicht nachteilig zu beeinflussen und die Verwendung gleicher Verbindungsmittel, wie z. B. Schrauben vorgegebener Länge, zu ermöglichen, weist die Schicht eine vorgegebene Schichtdicke von ca. 0,1mm bis 20mm, bevorzugt von ca. 0,1 mm bis 10 mm auf. Eine solche Schichtdicke ist ausreichend, da diese Schicht lediglich die Oberflächenrauhigkeit und Unebenheiten der Stoßflächen ausgleichen aber den Kraftfluss nicht beeinflussen soll.

In einer bevorzugten Weiterbildung der Erfindung sind Mittel zum Beeinflussen der Viskosität der Schicht vorgesehen. Dadurch kann die Schicht in einem festen Zustand zur Baustelle transportiert werden und dort eingebaut werden. In der Einbausituation kann die Viskosität der Schicht so verändert werden, dass sie sich den Oberflächen der Stoßflächen anpasst. Dies kann z. B. dadurch erfolgen, dass in ein thermoplastisches Material Heizdrähte integriert werden. Sobald die vorgeformte(n) Schicht(en) eingebaut sind, werden die Heizdrähte mit einem Strom beaufschlagt. Durch die Erwärmung sinkt die Viskosität des Materials und es passt sich an die anliegenden Oberflächen an. Sobald der Strom abgeschaltet wird, kühlen die Heizdrähte und damit auch das thermoplastische Material ab und das Material verfestigt sich wieder.

Die Möglichkeit, die Viskosität des Materials durch Erwärmung abzusenken, bietet natürlich auch Vorteile bei der Demontage, wenn z. B. einzelne Sektionen eines Turmes wieder von einander getrennt werden sollen. Nach dem Lösen der Schraubverbindungen, welche die kraftschlüssige Verbindung bewirken, wird das Material wiederum erwärmt, seine Viskosität sinkt und die Turm-Sektionen lassen sich problemlos trennen.

Insbesondere ist wenigstens eine einseitige Beschichtung der Schicht bzw. Schicht-Segmente mit einem Klebstoff vorgesehen. Dadurch lassen sich die Schicht-Segmente in einer vorgegebenen Position fixieren. Die Schicht bzw. die Schicht-Segmente können daher bereits während der Herstellung z. B. einer Turm-Sektion auf die Stoßfläche gelegt werden und haften dann an dieser Stoßfläche, so dass ein unbeabsichtigtes Verschieben während des Transports und während der Montage verhindert wird.

Auch wenn die Schicht-Segmente erst auf der Baustelle verarbeitet werden, kann der Klebstoff ein unbeabsichtigtes Verschieben natürlich verhindern. Dabei können die mit Klebstoff beschichteten Seiten der Schicht bzw. Schicht-Segmente mit einer Folie abgedeckt sein, um eine unerwünschte Verschmutzung des Klebstoffes und damit eine Beeinträchtigung seiner Adhäsionsfähigkeit zu vermeiden.

Weitere vorteilhafte Ausführungsformen der Erfindung sind in den Unteransprüchen angegeben.

Nachfolgend wird eine Ausführungsform der Erfindung anhand der Figuren näher erläutert. Dabei zeigen:
- Figur 1: eine erfindungsgemäße Flanschverbindung;
- Figur 2: eine erfindungsgemäße Flanschverbindung mit einem Zwischenraum zwischen den Verbindungspartnem; und
- Figur 3: eine erfindungsgemäße Flanschverbindung mit einem nachgearbeitetem Zwischenraum; und
- Figur 4: eine Draufsicht auf einen Übergang zwischen zwei Segmenten

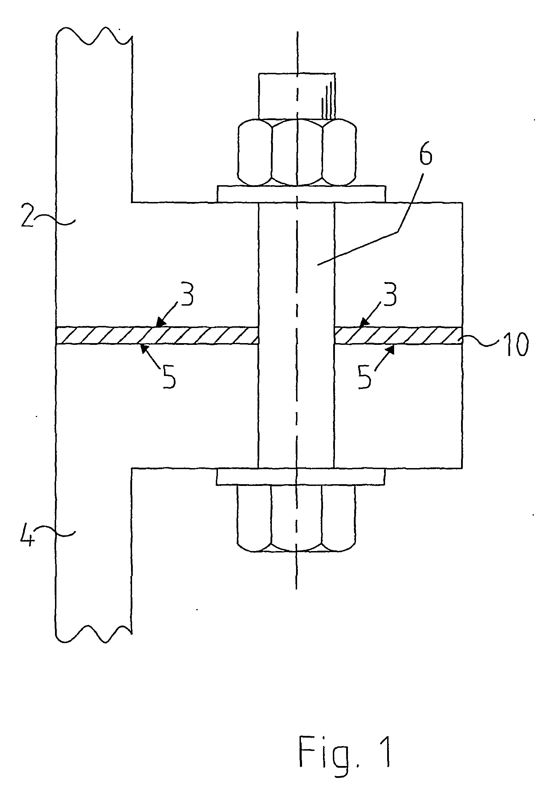

Figur 1 zeigt zwei Verbindungspartner 2, 4 einer Flanschverbindung. Diese Verbindungspartner 2, 4 sind mit den Stoßflächen 3, 5 zueinander ausgerichtet und durch eine Schraubverbindung 6 für eine kraftschlüssige Verbindung miteinander verbunden. Um Oberflächenrauhigkeiten und Unebenheiten der Stoßflächen 3, 5 auszugleichen, ist eine Schicht 10 (in der Figur vergrößert dargestellt) vorgesehen. Diese Schicht 10 wird zwischen den Verbindungspartnern 2, 4 angeordnet und ist wenigstens vorübergehend verformbar. Dadurch wird die Oberflächenstruktur der Verbindungspartner 2, 4 an den Stoßflächen 3, 5 in dieser Schicht 10 exakt abgebildet, so dass es sicher zur einer vollflächigen Berührung kommt.

Da die Schicht 10 aus einem druckfesten Material besteht, kann der Kraftfluss in dieser Flanschverbindung nun über die gesamten Stoßflächen 3, 5 erfolgen. Dabei ist zum Herstellen der kraftschlüssigen Verbindung zwischen den beiden Verbindungspartnern 2, 4, wie bereits aus dem Stand der Technik bekannt, die Schraubverbindung 6 vorgesehen. Die Schicht 10 dient nicht zum Herstellen dieser kraftschlüssigen Verbindung sondern einzig zum Ausgleich von Oberflächen-Unebenheiten.

Die Schicht 10 kann eine vorgeformte, segmentierte oder einstückig ausgebildete Schicht, z. B. aus einem thermoplastischen Material mit eingearbeiteten Heizdrähten, sein. Nach dem Fügen der benachbarten Schüsse kann das thermoplastische Material erwärmt und damit verformbar gemacht werden. Dadurch passt es sich an die Oberflächen der Flansche an und behält diese Form nach der Abkühlung bei, wobei es wieder seine vorgegebene Steifigkeit erreicht.

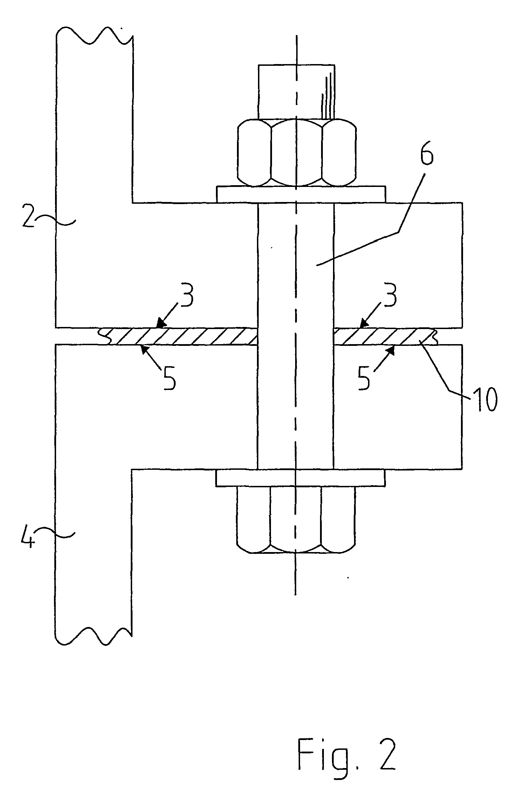

Figur 2 zeigt eine erfindungsgemäße Flanschverbindung, bei welcher die Schicht 10 den Zwischenraum zwischen den Verbindungspartnern 2, 4 nicht vollständig ausfüllt. Bei einer Anwendung bei Türmen, z. B. für Windenergieanlagen, kann in den offenen Zwischenraum jedoch Feuchtigkeit eindringen und dort zu Schäden führen. Da jedoch gerade im Fall von Türmen für Windenergieanlagen solche Flanschverbindungen hohe Lasten zu übertragen haben, ist es wichtig, dass diese Flanschverbindung davor geschützt sind.

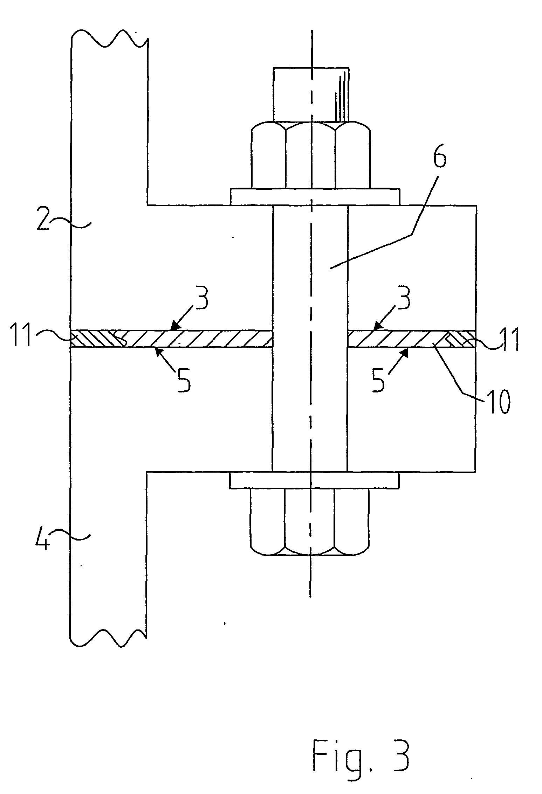

In Figur 3 ist dargestellt, dass z. B. im Zuge einer Nachbearbeitung eine Füllmasse 11 in diese verbleibenden Zwischenräume eingearbeitet wird. Diese Füllmasse 11 kann z. B. Silikon sein, das zum Ausfüllen der Zwischenräume verwendet wird. Damit kann keine Feuchtigkeit (und auch keine Fremdkörper) eindringen und die Flanschverbindung ist somit davor geschützt.

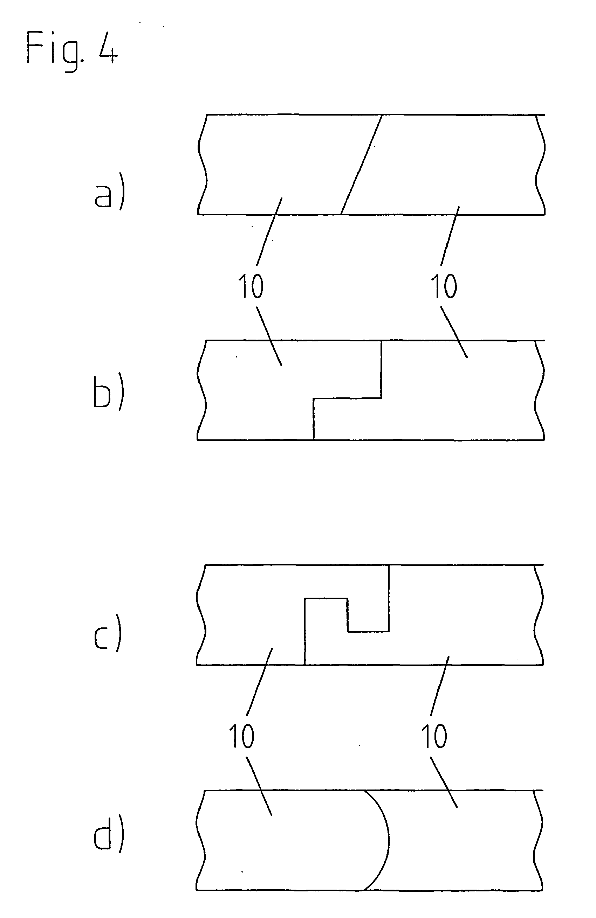

Figur 4 zeigt eine Draufsicht auf einen Übergang zwischen zwei Segmenten in mehreren Beispielen. In dem Beispiel a) ist der Übergang zwischen den zwei dargestellten Schicht-Segmenten 10 ein geradliniger. In dem Beispiel b) ist der Übergang stufig. Die Schicht-Segmente 10 lassen sich durch diese Formgebung auf einfache Weise sicher positionieren. In Beispiel c) greifen die Schicht-Segmente 10 hakenartig ineinander, so dass auch ein unbeabsichtigtes Auseinanderrutschen dieser Segmente verhindert wird. Bei dem Beispiel d) ist der Übergang zwischen zwei Schicht-Segmenten bogenförmig angelegt. Dadurch ist auf besonders einfache Weise eine Korrektur der Segment-Ausrichtung möglich, ohne dabei unerwünschte Abstände und damit Lufteinschlüsse in der Schicht hervorzurufen. Daher ließe sich insbesondere mit Übergängen, wie in dem Beispiel d) gezeigt, bei einer vorgegebenen, relativ geringen Länge jedes einzelnen Schicht-Segmentes mit einem standardisierten Schicht-Segment eine erfindungsgemäße Schicht auf Stoßflächen mit unterschiedlichen Radien herstellen.

An den einander zugewandten Stirnseiten der Schicht-Segmente 10 können elektrische Kontakte vorgesehen sein, welche in den Schicht-Segmenten 10 eingearbeitete (aber nicht dargestellt) Heizdrähte miteinander verbinden. Dadurch kann die Anordnung der Schicht vereinfacht und beschleunigt werden.

## Patentansprüche

1. Verfahren zur Verbindung von Turmsegmenten einer Windenergieanlage am Aufbauort der Windenergieanlage, wobei die Turmsegmente an ihren zugewandten Seiten mit einem Flansch versehen sind, wobei zwischen beiden Flanschen eine Schicht zum Ausgleichen von Unebenheiten und Oberflächenrauhigkeiten ausgebildet wird, die in einem ersten Zeitraum vor der Verbindung und in einem dritten Zeitraum nach der Verbindung weniger verformbar ist als in einem zweiten Zeitraum, wobei der zweite Zeitraum zwischen dem ersten und dem dritten Zeitraum liegt und wobei während des zweiten Zeitraums die Viskosität der Schicht erniedrigt wird und die Flansche bereits während des ersten Zeitraums durch eine Schraubverbindung miteinander kraftschlüssig verbunden sind und die Schicht entweder vor dem Transport eines Segments dort aufgebracht und geklebt wird oder am Aufbauort aus einer Transportverpackung entnommen und auf eine Stoßfläche eines Flansches geklebt wird.

2. Verfahren nach Anspruch 1,
**dadurch gekennzeichnet, dass** die Schichtdicke in etwa in einem Bereich von 0,1 mm bis 20mm liegt.

3. Verfahren nach Anspruch 1 oder 2,
**dadurch gekennzeichnet, dass** die Schicht vor der Verbindung einseitig an einen Verbindungspartner der Flanschverbindung angebracht wird.

4. Verfahren nach einem der vorhergehenden Ansprüche,
**dadurch gekennzeichnet, dass** innerhalb der Schicht elektrische Leitungen verlegt sind und mittels eines Stromflusses in den elektrischen Leitungen die Viskosität der Schicht nach der Verbindung der Flansche erniedrigt wird.

5. Verfahren nach einem der vorhergehenden Ansprüche,
**dadurch gekennzeichnet, dass** durch die Schicht der Kraftfluss zwischen den beiden Flanschen im Wesentlichen nicht beeinflusst wird.

6. Verfahren nach einem der vorhergehenden Ansprüche,
**dadurch gekennzeichnet, dass** die Schicht aus einem thermoplastischen Material besteht.

## Claims

1. Method for connecting tower segments of a wind power installation at the construction site of the wind power installation, wherein the tower segments are provided with a flange at their facing sides, wherein a layer for evening out unevenness and surface roughness is formed between the two flanges, which layer is less deformable in a first period of time prior to the connection and in a third period of time after the connection than in a second period of time, wherein the second period of time is between the first period of time and the third period of time and wherein the viscosity of the layer is lowered during the second period of time and the flanges are already connected to each other non-positively by a bolted connection during the first period of time and the layer is either applied and adhesively bonded to a segment before transport thereof or is removed from a transport packaging and adhesively bonded to an abutting surface of a flange at the construction site.

2. Method according to claim 1,
**characterised in that** the layer thickness is approximately in a range from 0.1 mm to 20 mm.

3. Method according to claim 1 or claim 2,
**characterised in that** the layer is applied, prior to the connection, on one side to one cooperating connecting member of the flange connection.

4. Method according to any one of the preceding claims,
**characterised in that** electrical lines are laid within the layer and the viscosity of the layer is lowered, after connection of the flanges, by means of a flow of current in the electrical lines.

5. Method according to any one of the preceding claims,
**characterised in that** the flow of force between the two flanges is substantially not affected by the layer.

6. Method according to any one of the preceding claims,
**characterised in that** the layer consists of a thermoplastic material.

## Revendications

1. Procédé pour assureur la liaison ou l'assemblage de segments de pylône d'une installation éolienne sur le site d'implantation de l'installation éolienne, les segments de pylône étant pourvus d'une bride sur leurs côtés mutuellement adjacents, procédé selon lequel on forme entre les deux brides une couche qui est destinée à compenser des défauts de planéité et des rugosités de surface, et est, pendant un premier laps de temps avant l'assemblage et pendant un troisième laps de temps après l'assemblage, moins déformable que pendant un deuxième laps de temps, ce deuxième laps de temps se situant entre le premier et le troisième laps de temps, et le procédé prévoyant d'abaisser la viscosité de ladite couche pendant le deuxième laps de temps, les brides ayant déjà été assemblées mutuellement par adhérence au cours du premier laps de temps au moyen d'une liaison d'assemblage vissée, et ladite couche étant soit appliquée et collée sur un segment avant le transport de celui-ci, soit prélevée d'un emballage de transport et collée sur une surface de plan de joint d'une bride sur le site d'implantation.

2. Procédé selon la revendication 1,
**caractérisé en ce que** l'épaisseur de ladite couche se situe environ dans une plage de 0,1 mm à 20 mm.

3. Procédé selon la revendication 1 ou 2,
**caractérisé en ce que** ladite couche est appliquée d'un côté sur l'un des partenaires de l'assemblage de la liaison d'assemblage par brides.

4. Procédé selon l'une des revendications précédentes,
**caractérisé en ce qu'**à l'intérieur de ladite couche sont placés des conducteurs électriques, et, après l'assemblage des brides, la viscosité de ladite couche est abaissée au moyen d'un flux de courant dans les conducteurs électriques.

5. Procédé selon l'une des revendications précédentes,
**caractérisé en ce que** ladite couche n'influence sensiblement pas le flux des efforts entre les deux brides.

6. Procédé selon l'une des revendications précédentes,
**caractérisé en ce que** ladite couche est réalisée en une matière thermoplastique.
